# EUROPEAN PATENT APPLICATION

(11) **EP 1 688 182 A1**
(43) Date of publication of application: **09.08.2006**
(21) Application number: 05460001.0
(22) Date of filing: 02.02.2005
(51) Int. Cl.: B02C 17/14

(54) **Method and apparatus for activating binding materials from fly ash**

(71) Applicant: Eko-Trade Sp. z.o.o., 41-103 Siemianowice Sl. (PL)
(72) Inventor: Siodmok, Henryk, zam. 44-361 Syrynia (PL); Kolorz, Piotr, zam. 44-292 Rybnik (PL); Rodacki, Mariusz, zam. 44-292 Rybnik (PL); Oles, Jacek, zam. 44-217 Rybnik (PL); Wzietek, Ireneusz, zam. 44-292 Rybnik (PL); Malirz, Dariusz, zam. 40 671 Katowice (PL)
(74) Representative: Wozniak, Jolanta

(57) **Abstract**

The method of activating binding materials from fly-ashes is distinctive by the fact that the ash with different granulation and fairy regular shape of particles is subjected to the process of dry mechanic dezagglomeration and activation through dynamic collisions and crushings of ash particles which are between grinding mediums and the cover of the milling box (2) and through dislocation which is compatible with the amplitude of vibration of the main shaft (4) that is affected by mass charges - debalances (5) and located by helical trajectory to the unloading area.

The device for receiving binding materials from fly-ashes is characteristic by the fact that it has its power frame (1) to which a resilient pneumatic suspension is attached (12), on which there is a container that has at least one cylindrical milling box (2) joined by traverses (14). Furthermore, there is power transmission (3) on the power frame (1) is mounted on the bearing frame (1) from which the turning moment is carried from the engine on the main shaft (4) that consists of a few sections. Each section has mass charges (debalances) (5).

## Description

The subject of the invention is the method and the device for receiving binding materials from conventional and fluid ashes obtained from burning of hard coal, intended to be used in the building trade.

In the United States, the patent specification No. 4344796 gives the method of producing the hardened composition from the remains obtained after burning in stove of fluid deposit mixed with conventional fly-ashes, produced through mixing hardened composition or condiment.

The method known from the patent specification No. 86420 of activating the fly-ashes for condiments and concrete: 85-95% weight of fly-ashes is mixed with 4-7% weight of high-silica sand and sulphatic activator in the form of dihydrous and hemihydrous gypsum. After that, it is granulated in a ball mill untill the proper specific surface is received, and if there is a need the mixture is heated during milling for 15-25 minutes in the temperature of 90-400 Celsius degrees.

The patent specification No. 134 580 gives us also a desription of activated ash and cementiious binder which includes cement and fly-ash from carbon in the weight proportion from 1:1,2 to 1:0,8 and from 0,015 to 0,025 of weight share of chemical activator which consists of the mixture of iron salt and strong acid salt. This binder undergoes mechanic and chemical activation through milling with chemical activator to obtain the proper specific surface.

In Poland, the patent specification No. 182245 describes a four-roller mill that is powered by two electric engines. The turns of the first engine are transferred through the belt transmission on the bottom roller from which the upper roller is powered through the chain transmission. There is a built-up cone clutch between the engine and the bottom roller that carries changed turns of the engine on a pair of rollers; one upper and one lower roller has an off-centre regulation of working port where the upper pair of rollers has properly hardened frengent and crumbling edges located along the whole surface of mantles parallelly to their axis and cut at straight angle to their surface. The whole working surface and bushes are covered by high-abrasibility material. Over the upper roller in the cover of casing of the mill, there is a charging hopper in which the material intended for milling is backfilled. Below the bottom rollers there is a container for grind material.

The patent specification No. 180380 gives us a description of the device for receiving binding materials from fly-ashes in which the roller part of the container is finished at the top by a lid covered by dielectric material from inside, and in the roller part of the container there is a working box located on brackets in cylindrical shape which is finished from one side by open and cut from the top cone, and from the other side by the bottom with central opening and a number of circumferential slots. The working box has a coaxial blow connection with a shield in the bottom and an impeller. The impeller has bearing shield with spatulas finished with swingles. The bearing shield is connected with the rotary shaft located on the vertical axis of the container, which transfers power from the engine to the impeller. The shaft is separated from the loading area by a cover. There are ictal plates with bars mounted to walls of working box just over the bottom.

The method of activating binding materials from fly-ashes which is based on activation of ash particles is characteristic due to the fact that the ash with different granulation and fairy regular shape of particles is subjected to the process of dry mechanic dezagglomeration and activation through dynamic collisions and crushings of ash particles which are between grinding mediums and the cover of the milling box and through dislocation which is compatible with the amplitude of vibration of the main shaft that is affected by mass charges - debalances and located by helical trajectory to the unloading area. The fragmentation, comminution and cracking of the grain structures enables the access to SiO₂ which is located in the centre of the ash particle.

The device for receiving binding materials from fly-ashes consisting of the basis, milling box with power transmission is characteristic due to the fact that its basis is in the form of power frame to which a resilient pneumatic suspension is attached on which there is a container that has at least one milling box which is cylindrical in shape, which is joined with traverses. In the container's traverses, between the section of boxes, there are ball bearings in which there are the main shafts connected between themselves by Cardan joints, and on the power frame there is the power transmission from which the turning moment is carried from the engine on the main shaft that consists of a few sections. Each section has mass charges - debalances which are located in pairs heading in the same direction and with the same angles between them. The milling boxes are finished with stable inseparable flange with screwed disc with opening ports on the whole frontal surface, and on the back there is a cover with a blow connection and inside the milling box there is a a plate-armor that is resiliently tighten to the surface of the milling box with roman screws.

The invention is shown in the pictures. fig.1 the side-view, fig.2 the front-view, fig.3 the cross-section, fig.4 the partial cross-section of the finishing element of the milling box, fig. 5 the resilient pneumatic suspension (the scheme).

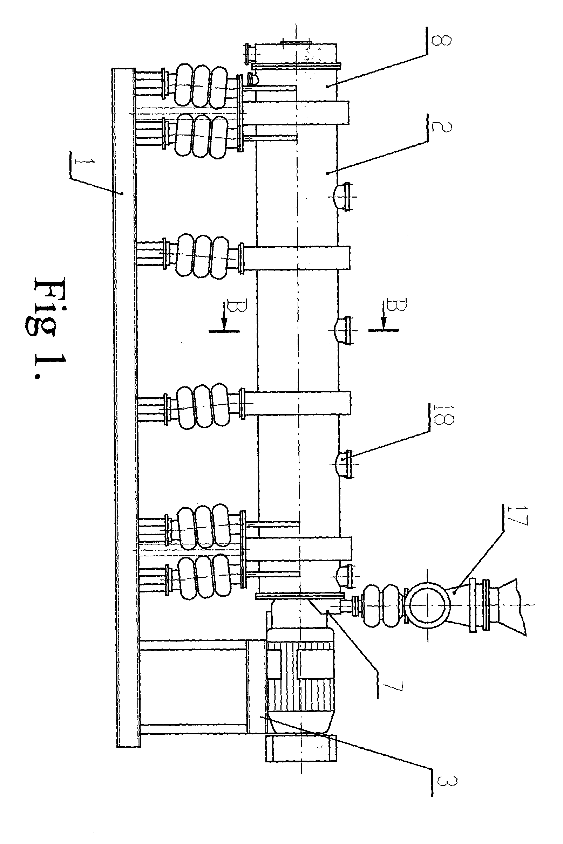

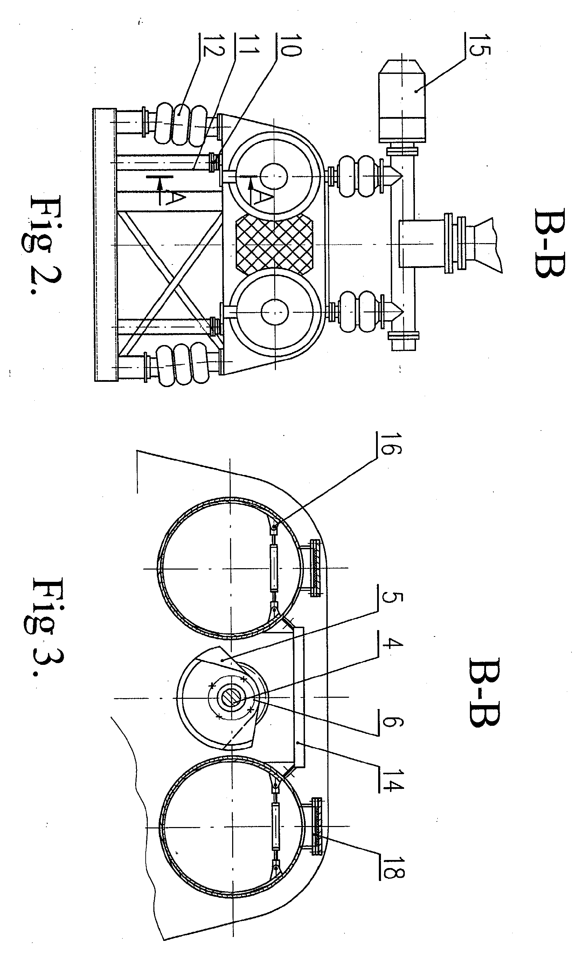

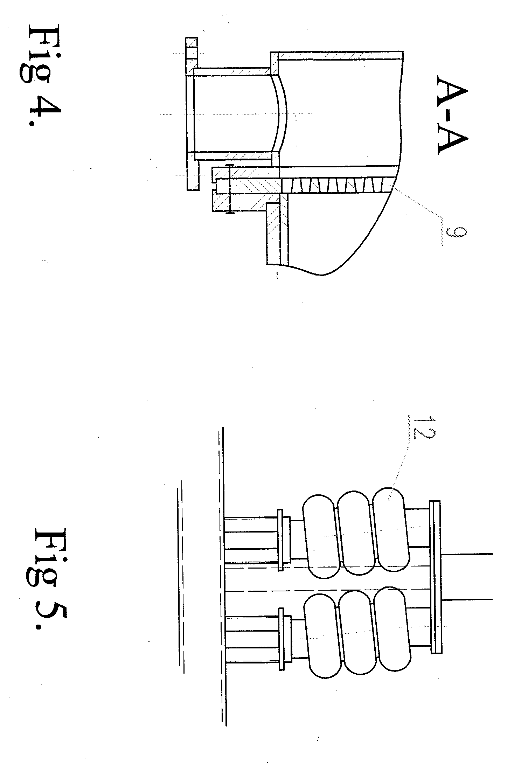

According to the invention, the device for receiving binding materials consists of the basis (bearing frame) (1) to which the resilient pneumatic suspension is attached (12) with of twelve pneumatic balloons; on them, there is a container with two milling boxes cylindrical in shape (2); the milling boxes are connected with four traverses (14). On the bearing frame (1), there is power transmission (3) from which the turning moment is carried from the engine to the main shaft (4); the main shaft consists of four sections where each one has mass charges - debalances (5); mass charges are on each section of the shaft paired and located in one direction and with the same angles between them and the regulation of the angles affects the amplitude of vibrations and the frequency.

Milling boxes (2) are finished with stable and inseparable flange with screwed disc with opening ports on the whole frontal surface (9), and on the back there is a cover with a blow connection (7). Inside of the milling box there is a steel plate-armor (16) that is resiliently tighten to the surface of the milling box with roman screws. In the upper parts of the milling boxes, there are eight technological arces (18) designed to cover up grinding mediums and the control of roman screws which are distending the plate-armor of the milling boxes.

At the rotation of the shaft with 4 mass charges (debalances) originates the force which causes the vibrations of the container and milling boxes, but thanks to the soft amortisation that comes from the suspension of the container on pneumatic balloons the vibrations practically do not transfer on the basis. As a result of the vibrations of the container, the grinding mediums that are located inside, make complex oscillatory movements hitting each other and simultaneously circulate in the container crushing and destroying the grain structure. The material in the milling box reaches the space between grinding mediums and undergoes intensive and dynamic hitting process is all the time crushed and as a result the structure of grains is destroyed which move by helical trajectory to the unloading area.

The invented device allows to obtain binding materials with good technical and technological characteristics which can be used in the building industry and mixing powdery elements and their accurate homogenization (obtaining mixed binders on the basis of activated ash).

### An Example.

Fly-ash with the following chemical composition: SiO₂-45.95% weight; Al₂O₃-24.87% weight; Fe₂O₃-9.72% weight; CaO-5.40% weight; MgO005.71% weight; Na₂O-0.96% weight; was put into the device. Ash particles were subjected to the process of dry mechanical activation. As a result, a non-homogeneous product was obtained. Because of its destroyed structures and cracked ash grains, the material became very active. The obtained product has the characteristics that are typical for binding materials.

## Claims

1. The method of activating binding materials from fly-ashes is distinctive by the fact that the ash with different granulation and fairy regular shape of particles is subjected to the process of dry mechanic dezagglomeration and activation through dynamic collisions and crushings of ash particles which are between grinding mediums and the cover of the milling box (2) and through dislocation which is compatible with the amplitude of vibration of the main shaft (4) that is affected by mass charges - debalances (5) and located by helical trajectory to the unloading area.

2. The method in accordance with restriction No. 1 is distinctive by the fact that in each milling box (2), there must be the identical number of grinding mediums (mass), where grinding mediums have the proper shape and assorted number of fraction in a set.

3. The device for receiving binding materials from fly-ashes consisting of the basis and milling box with power transmission, with unloading part is characteristic by the fact that its basis is in the form of power frame (1) to which a resilient pneumatic suspension is attached (12), on which there is a container that has at least one milling box which is cylindrical in shape (2) joined by traverses (14). Furthermore, the power transmission (3) is mounted on the bearing frame (1) from which the turning moment is carried from the engine on the main shaft (4) that consists of a few sections. Each section has mass charges - debalances (5).

4. The device in accordance with restriction No. 3 is distinctive due to the fact that each section has mass charges (debalances) (5) on each section of the main shaft (4) and located in pairs heading in the same direction and with the same angles between them.

5. The device in accordance with restriction No. 5 is distinctive due to the fact that in the upper parts of the milling boxes (2) there are technological arces (18) designed to cover up grinding mediums and the control of roman screws which are distending the plate-armor of the milling boxes (16).
